# EUROPÄISCHE PATENTSCHRIFT

(11) **EP 1 715 244 B1**
(45) Veröffentlichungstag und Bekanntmachung des Hinweises auf die Patenterteilung: **16.07.2008**
(21) Anmeldenummer: 06007637.9
(22) Anmeldetag: 12.04.2006
(51) Int. Cl.: F21S 8/10, B60Q 1/26, G02B 6/00

(54) **Signalleuchte für Fahrzeuge**
Signalling light for vehicles
Lampe de signalisation pour véhicules

(30) Priorität: 20.04.2005 DE 102005018212
(43) Veröffentlichungstag der Anmeldung: 25.10.2006
(73) Patentinhaber: Hella KGaA Hueck & Co., 59552 Lippstadt (DE)
(72) Erfinder: Hüsgen, Bruno, 59602 Rüthen (DE); Mügge, Martin, 59590 Geseke (DE)
(74) Vertreter: Ostermann, Thomas

(56) Entgegenhaltungen:
- EP-A- 1 359 369
- DE-A1- 10 207 694
- US-A1- 2002 093 829

## Beschreibung

Die Erfindung betrifft eine Signalleuchte für Fahrzeuge mit einem flächigen Lichtleiter, der an einer Schmalseite eine Lichteinkoppelfläche aufweist, wobei der Lichteinkoppelfläche mindestens eine Lichtquelle vorgelagert ist, der an einer Vorderseite eine Lichtaustrittsfläche aufweist und der an einer der Vorderseite abgewandten Rückseite eine Mehrzahl von reflektierenden Elementen aufweist.

Aus der EP 1 167 870 A2 ist eine Signalleuchte für Fahrzeuge mit einem flächigen Lichtleiter bekannt. Der Lichtleiter ist als Teil einer Abschlussscheibe ausgebildet, wobei an einer Schmalseite des flächigen Lichtleiters eine Lichteinkoppelfläche angeordnet ist. An der Schmalseite des flächigen Lichtleiters ist eine Mehrzahl von Leuchtdioden als Lichtquellen angeordnet. Das an der Lichteinkoppelfläche eintretende Licht wird an einer mit prismatischen Strukturen bzw. mit einer Mikrooptik versehenen Rückseite des Lichtleiters in eine Lichtaustrittsrichtung etwa senkrecht zu einer als Lichtaustrittsfläche dienenden Vorderseite des Lichtleiters abgelenkt. Zur Erzeugung der vorgegebenen Lichtverteilung der Signalleuchte weist die Vorderseite des flächigen Lichtleiters Optikelemente auf. Das Erscheinungsbild der Signalleuchte wird daher im Nichtbetriebszustand derselben, also im ausgeschalteten Zustand der Lichtquelle, im Wesentlichen durch die Formgebung der Vorderseite des Lichtleiters bestimmt.

Aus der DE 102 19 738 A1 ist eine Signalleuchte für Fahrzeuge mit einem flächigen Lichtleiter bekannt. Eine Schmalseite des flächigen Lichtleiters ist als Lichteinkoppelfläche ausgebildet, an der mindestens eine Lichtquelle angeordnet ist. Eine in Lichtabstrahlrichtung vordere Fläche des flächigen Lichtleiters dient als Lichtaustrittsfläche. Eine der Vorderseite des Lichtleiters abgewandte Rückseite desselben weist reflektierende Elemente auf, die als Punktmuster in einer vorgegebenen Farbe auf der Rückseite des Lichtleiters aufgedruckt sind. Die reflektierende Elemente, die eine lichtstreuende Funktion haben, sind mit einem zunehmenden Abstand zu der Lichtquelle kontinuierlich größer bzw. zahlenmäßig größer ausgebildet, so dass eine homogene Lichtabstrahlung gewährleistet ist. Die Funktion der reflektierenden Elemente an der Rückseite des Lichtleiters beschränkt sich auf die lichtstreuende Wirkung.

Aus der US 2002/0093829 A1 ist eine Signalleuchte für Fahrzeuge mit einem flächigen Lichtleiter bekannt. Innerhalb des Lichtleiters sind Einlagerungen vorgesehen, mittels derer das von einer Schmalseite des Lichtleiters über eine Lichtquelle eingekoppelte Licht zu einer flächigen Vorderseite hin ausgekoppelt wird. Durch die Einlagerung wird das seitlich eingekoppelte Licht sowohl zu der Vorderseite als auch zur Rückseite hin streuend umgelenkt. Zur Nutzung des zur Rückseite hin umgelenkten Lichtanteils ist eine zusätzliche Spiegelfläche erforderlich.

Aufgabe der vorliegenden Erfindung ist es, eine Signalleuchte für Fahrzeuge mit einem flächigen Lichtleiter derart weiterzubilden, dass auf herstellungstechnisch einfache Weise eine flächenhaft homogene Lichtabstrahlung gewährleistet ist, wobei zumindest im Nichtbetriebszustand der Leuchte eine Konturierung des Lichtleiters erkennbar ist.

Zur Lösung dieser Aufgabe weist die Erfindung die Merkmale des Patentanspruchs 1 auf.

Der besondere Vorteil der Erfindung besteht darin, dass lediglich durch Aufbringen von Auskoppelelementen an einer Rückseite eines flächigen Lichtleiters auf einfache Weise zum einen lichttechnische Erfordernisse und zum anderen Designvorgaben erfüllt werden. Die Auskoppelelemente weisen eine solche Form und/oder Kontur auf, dass sie zum einen eine vorgegebene Leuchtdichteverteilung der Signalleuchte ermöglichen. Zum andern weisen die Auskoppelelementen eine solche Form bzw. Größe auf, dass sie im Nichtbetriebszustand der Signalleuchte in einem Abstand von einem Betrachter erkennbar sind und somit als Designelemente der Signalleuchte ein vorgegebenes stilistisches Gepräge geben. Im Betriebszustand der Signalleuchte erscheint die Lichtaustrittsfläche als homogen ausgeleuchtete Fläche.

Erfindungsgemäß sind die Auskoppelelemente gruppiert in unterschiedlichen Blöcken der Rückseite angeordnet. Die Größe der jeweils blockweise zusammengefassten Auskoppelelemente nimmt mit der Entfernung zu der Lichteinkoppelfläche blockweise sprunghaft zu, so dass die gesamte Lichtleiterauskoppelfläche eine relativ homogene Lichtabstrahlung ermöglicht.

Vorzugsweise sind die Auskoppelelemente gleichförmig bzw. gleichartig ausgebildet, so dass ein regelmäßiges Rasterdekor sichtbar ist.

Nach einer Weiterbildung der Erfindung sind die Auskoppelelemente derart in Blöcken auf der Rückseite zusammengefasst, dass blockweise eine homogene Lichtabstrahlung erfolgt. Hierdurch ergibt sich eine homogene Lichtabstrahlung innerhalb von Teilbereichen der Lichtleiterfläche, wobei die Lichtabstrahlintensität von Block zu Block unterschiedlich gewählt sein kann.

Nach einer Weiterbildung der Erfindung ändert sich die Größe der Auskoppelelemente kontinuierlich mit der Entfernung zu der Lichteinkoppelfläche. Hierdurch ergibt sich insgesamt eine homogene Lichtabstrahlung.

Nach einer Weiterbildung der Erfindung ist ein Teilbereich des Lichtleiters ohne Auskoppelelemente oder mit Auskoppelelementen kleiner Größe versehen, so dass in Lichtaustrittsrichtung vor- oder nachgelagerte Lichtaustrittsmittel zur Erzeugung einer weiteren Lichtfunktion nicht beeinträchtigt werden.

Nach einer Weiterbildung der Erfindung ist die Anzahl und/oder die Größe und/oder die Verteilung der in einem Block angeordneten Auskoppelelemente von der Formgebung der Signalleuchte abhängig. Im Bereich einer starken Pfeilung der Signalleuchte kann eine größere Anzahl bzw. eine dichtere Anordnung der Auskoppelelemente im spitz zulaufenden Block vorgesehen sein, so dass die Anforderungen hinsichtlich eines Seitenmarkierungslichtes erfüllt werden.

Nach einer Weiterbildung der Erfindung nehmen die Auskoppelelemente bis zu 75 % der Fläche der Rückseite des Lichtleiters ein. Die Erstreckung der Auskoppelelemente selbst kann mehrere Zentimeter umfassen.

Nach einer Weiterbildung der Erfindung können die Auskoppelelemente als Kreiselemente und/oder als Linienelemente und/oder als Kreisringelemente ausgebildet sein, die vorzugsweise regelmäßig und in einem festen Abstand zueinander in einem Block angeordnet sind. Zusätzlich können die Auskoppelelemente auch in Form von Symbolen und/oder Logos und/oder einer Beschriftung angeordnet sein, so dass sie zu Informationszwecken dienen können.

Auf herstellungstechnisch einfache Weise können die Auskoppelelemente auf der Rückseite des Lichtleiters durch Aufdrucken aufgebracht sein. Alternativ können die Auskoppelelemente auch als Laserstrukturierung oder durch Erodierung oder durch Ätzung aufgebracht sein.

Ausführungsbeispiele der Erfindung werden nachfolgend anhand der Zeichnungen näher erläutert.

Es zeigen:
- Figur 1: eine perspektivische Rückansicht einer Signalleuchte unter Weglassung eines Gehäuses mit Auskoppelelementen nach einer ersten Ausführungsform,
- Figur 2: eine schematische Rückansicht eines flächigen Lichtleiters mit Auskoppelelementen nach einer zweiten Ausführungsform,
- Figur 3: eine schematische Rückansicht eines flächigen Lichtleiters mit Auskoppelelementen nach einer dritten Ausführungsform,
- Figur 4: eine schematische Rückansicht vierten Ausführungsform,
- Figur 5: eine schematische Rückansicht eines flächigen Lichtleiters mit Auskoppelelementen nach einer fünften Ausführungsform und
- Figur 6: eine schematische Rückansicht eines flächigen Lichtleiters mit Auskoppelelementen nach einer sechsten Ausführungsform.

Eine Signalleuchte für Fahrzeuge kann beispielsweise als Schlusslicht, Seitenmarkierungslicht oder Positionslicht eingesetzt werden. Die erfindungsgemäße Signalleuchte besteht im Wesentlichen aus einem flächigen Lichtleiter 1 und einer Mehrzahl von als Leuchtdioden (LED-Elemente) ausgebildeten Lichtquellen 2, die an einer Schmalseite 3 des Lichtleiters 1 angeordnet sind. Der Lichtleiter 1 und die Lichtquellen 2 sind von einem nicht dargestellten Leuchtengehäuse umgeben.

Die Leuchtdioden 2 sind mit ihren Hauptachsen quer zu einer Lichtaustrittsrichtung 4 in der Nähe der Schmalseite 3 angeordnet, so dass das von den Leuchtdioden 2 abgestrahlte Licht durch die Schmalseite 3 (Lichteinkoppelfläche) in den plattenförmigen Lichtleiter 1 eintritt.

Das eingekoppelte Licht wird innerhalb des Lichtleiters 1 durch Totalreflexion weitergeleitet. Der Lichtleiter 1 weist auf eine der Lichtaustrittsseite desselben abgewandten Rückseite 5 eine Mehrzahl von reflektierenden Auskoppelelementen 6 auf, an denen das Licht in Richtung einer eine Lichtaustrittsfläche bildenden Vorderseite 7 des Lichtleiters 1 reflektiert wird. Die Vorderseite 7 des Lichtleiters 1 ist im Wesentlichen eben ausgebildet; sie weist keine optischen Strukturen auf.

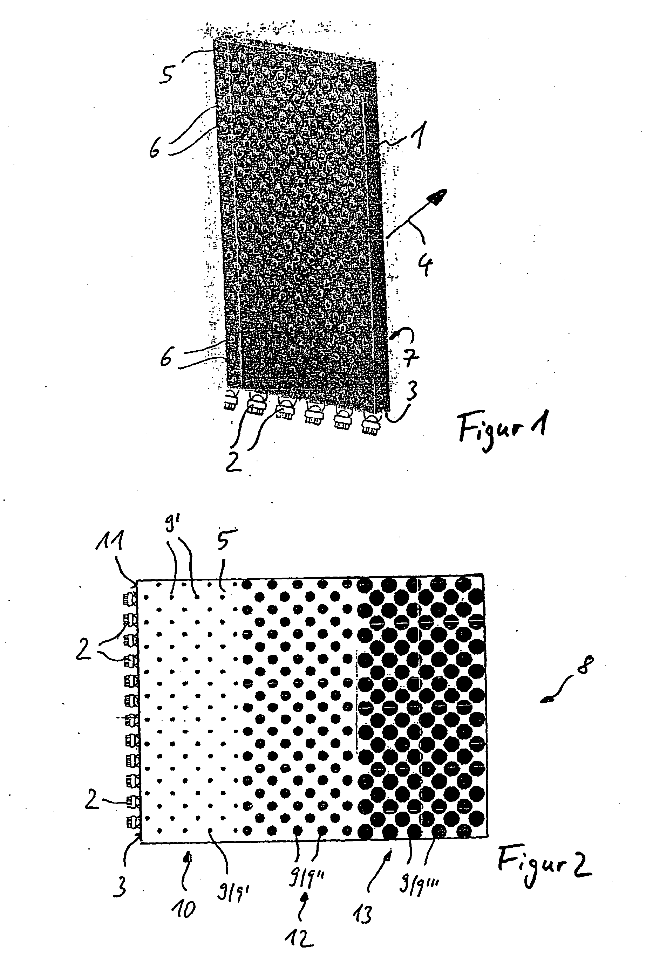

Wie aus Figur 1 ersichtlich ist, können die Auskoppelelemente 6 als Kugelelemente erhaben von der Rückseite 5 des Lichtleiters 1 ausgebildet sein. Mit größer werdendem Abstand zu der Lichteinkoppelfläche 3 sind die Kugelelemente 6 größer ausgebildet, so dass der Lichtleiter 1 als Lichtfläche ("Lichtvorhang") eine relativ homogene Lichtabstrahlung bewirkt.

Im Nichtbetriebszustand der Signalleuchte, also im ausgeschalteten Zustand der Lichtquellen 2, sind die Kugelelemente 6 in einem Abstand des Betrachters zu dem Lichtleiter 1 erkennbar. Der Lichtleiter 1 ermöglicht somit ein rasterartiges bzw. gitterförmiges Erscheinungsbild.

Die Flächen der Kugelelemente 6 nehmen etwa 75 % der Fläche der Rückseite 5 ein. Sie bilden daher ein bestimmendes Stilelement des Lichtleiters 1. Der Durchmesser der Kugelelemente 6 liegt in einem mm-Bereich.

Nach einem nicht dargestellten Ausführungsbeispiel kann die Rückseite in einem bevorzugten Teilbereich eine größere Dichte an Auskoppelelementen 6 aufweisen. Der Teilbereich befindet sich vorzugsweise in einem spitz zulaufenden Eckbereich eines Lichtleiters, wenn es sich um eine stark gepfeilte Heckleuchte handelt. Hierdurch können dann die Anforderungen hinsichtlich eines Seitenmarkierungslichtes erfüllt werden.

Nach einer nicht dargestellten weiteren Ausführungsform der Erfindung kann die Rückseite 5 des Lichtleiters 1 auch in einem Teilbereich eine relativ geringe Dichte von Auskoppelelementen 6 bzw. frei von Auskoppelelementen 6 sein. Dieser Teilbereich des Lichtleiters korrespondiert zu weiteren Lichtaustrittsmitteln zur Erzeugung einer weiteren Lichtfunktion, die dem Teilbereich des Lichtleiters vor- und/oder nachgelagert sind. Auf diese Weise wird eine lichttechnische Beeinflussung der Lichtaustrittsmittel weitestgehend minimiert.

Nach einer in Figur 2 dargestellten Ausführungsform eines Lichtleiters 8 kann dieser an der Rückseite 5 eine Mehrzahl von Auskoppelelementen 9 aufweisen, die als Kreiselemente ausgebildet sind. Die Kreiselemente 9 sind gruppiert gleicher Größe und gleichen Abstandes in unterschiedlichen Blöcken der Rückseite angeordnet. In einem ersten Block 10 der Rückseite des Lichtleiters 8, der einer Schmalseite 11 zugewandt ist, an der sich die Lichtquellen 2 befinden, sind Kreiselemente 9' angeordnet, die über einen gleichen Durchmesser von 1 mm bis 2 mm verfügen. Auf einer der Schmalseite 11 abgewandten Seite schließt sich ein zweiter Block 12 an, der über gleichartig und gleichförmig ausgebildete Kreiselemente 9" verfügt, deren Durchmesser etwa doppelt so groß ist wie der Durchmesser der Kreiselemente 9'. Auf einer dem ersten Block 10 abgewandten Seite des zweiten Blocks 12 schließt sich ein dritter Block 13 an, in dem gleichartig ausgebildete Kreiselemente 9''' mit einem Durchmesser von ca. 5 mm angeordnet sind. Die Fläche der Kreiselemente 9''' kann hierbei größer als 75 % der Fläche des Lichtleiters 8 sein. Die Größe der Auskoppelelemente 9 vergrößert sich sprunghaft blockweise in einem Abstand zu der Schmalseite 11. Der Abstand der Auskoppelelemente 9, 9', 9", 9''' der jeweiligen Blöcke 10, 12, 13 verringert sich sprunghaft blockweise mit dem Abstand zu der Schmalseite 11.

Die Blöcke 10, 12, 13 weisen eine solche Dimension auf, dass von den jeweiligen Blöcken 10, 12, 13 aus eine homogene flächige Lichtabstrahlung gewährleistet ist.

Alternativ können die Auskoppelelemente 9 auch mit zunehmender Entfernung zu der Lichteinkoppelfläche kontinuierlich vergrößert ausgebildet sein.

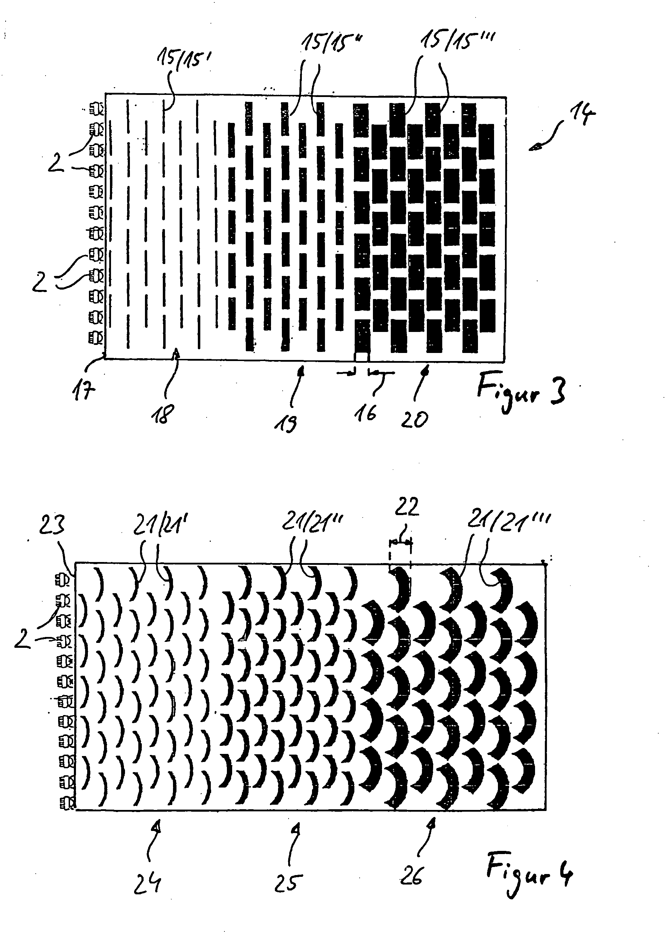

Nach einer weiteren Ausführungsform eines Lichtleiters 14 gemäß Figur 3 können die Auskoppelelemente als Linienelemente 15 ausgebildet sein, deren Quererstreckung 16 blockweise ausgehend von einer Schmalseite 17 - in Übereinstimmung mit dem vorhergehenden Ausführungsbeispiel - zunimmt. Beispielhaft sind - wie im vorhergehenden Ausführungsbeispiel - ein erster Block 18, ein zweiter Block 19 und ein dritter Block 20 vorgesehen, in denen die Linienelemente 15', 15", 15''' gruppiert angeordnet sind. Alternativ können auch mehr als drei Blöcke vorgesehen sein. Die Kontur der Blöcke 18, 19, 20 kann rechteckförmig, kreisförmig, ovalförmig oder mehreckförmig sein.

Nach einer weiteren Ausführungsform der Erfindung gemäß Figur 4 können Auskoppelelemente als Bogenelemente 21 ausgebildet sein, deren Quererstreckung 22 blockweise und sprunghaft mit dem Abstand zu einer Schmalseite mit einem Abstand zu einer Lichteinkoppelfläche 23 ansteigt. Ein der Lichteinkoppelfläche 23 zugewandter erster Block 24 weist relativ kleine Bogenelemente 21', ein mittlerer zweiter Block 25 vergleichsweise breitere Bogenelemente 21" und ein sich anschließender dritter Block 26 relativ breite Bogenelemente 21''' auf.

Alternativ können die Bogenelemente auch als Teilkreiselemente oder pfeilförmige Auskoppelelemente mit einer offenen Seite ausgebildet sein.

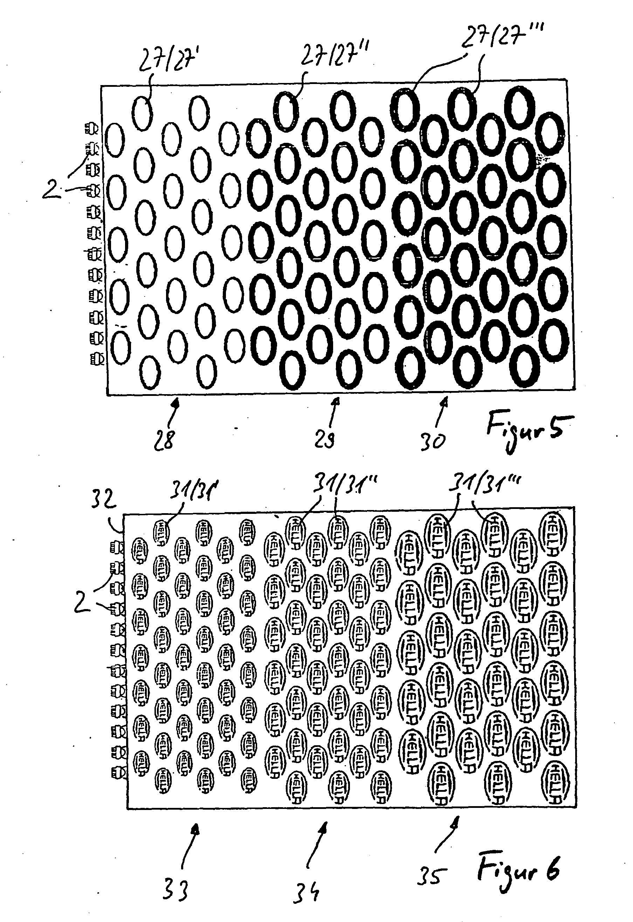

Nach einer weiteren Ausführungsform der Erfindung gemäß Figur 5 sind Auskoppelelemente 27 geschlossen ausgebildet. Im vorliegenden Ausführungsbeispiel ist ein erster Block 28 mit ovalförmigen Auskoppelelementen 27', ein zweiter Block 29 mit ovalförmigen Auskoppelelementen 27" größerer Liniendicke und ein dritter Block 30 mit ellipsoidförmigen Auskoppelelementen 27''' mit einer weiter vergrößerten Linienstärke ausgebildet. Nach einer nicht dargestellten Ausführungsform können die Auskoppelelemente 27 auch als Kreisringelemente ausgebildet sein.

Nach einer weiteren Ausführungsform gemäß Figur 6 sind Auskoppelelemente 31 vorgesehen, die in Form eines Logos "Hella" angeordnet ausgebildet sind. Die Größe der Logos nimmt blockweise ausgehend von der Lichteinkoppelfläche 32 zu. In einem ersten Block 33 sind Auskoppelelemente 31' mit einer kleinen Längserstreckung, in einem zweiten Block 34 Auskoppelelemente 31" mit einer mittleren Längserstreckung und in einem dritten Block 35 Auskoppelelemente 31''' mit einer großen Längserstreckung angeordnet. Alternativ können die Auskoppelelemente 31 auch als Symbole oder als Beschriftung ausgebildet sein und damit zu Informationszwecken dienen.

Die Auskoppelelemente 6, 9, 15, 21, 27, 31 können beispielsweise durch Drucken, Siebdrucken, auf die Rückseite des Lichtleiters 1, 8, 14 aufgebracht sein. Alternativ können die Auskoppelelemente 6, 9, 15, 21, 27, 31 auch als Laserstrukturierung oder durch Erodierung oder durch Ätzung aufgebracht sein. Die Auskoppelelemente können dreidimensional oder zweidimensional ausgebildet sein.

Bei Ausführung von gedruckten Auskoppelelementen 6, 9, 15, 21, 27, 31 können die Auskoppelelemente 6, 9, 15, 21, 27, 31 eine gleiche Farbgebung, beispielsweise weiß, rot, silber, blau oder dergleichen aufweisen, die sich von der Farbgebung des Grundkörpers des Lichtleiters 1 unterscheidet. Nach einer alternativen Ausführungsform können die Auskoppelelemente 6, 9, 15, 21, 27, 31 auch zueinander eine unterschiedliche Farbgebung aufweisen, dass heißt eine Gruppe von Auskoppelelementen 6, 9, 15, 21, 27, 31 kann in weißer Farbe, eine weitere Gruppe in roter Farbe ausgebildet sein. Die unterschiedlich gefärbten Auskoppelelemente 6, 9, 15, 21, 27, 31 können durch Mehrfarbdrucken auf den Lichtleiter 1 aufgebracht werden.

## Patentansprüche

1. Signalleuchte für Fahrzeuge mit einem flächigen Lichtleiter (1, 8, 14),
- der an einer Schmalseite eine Lichteinkoppelfläche (3, 11, 17, 23, 32) aufweist, wobei der Lichteinkoppelfläche (3, 11, 17, 23, 32) mindestens eine Lichtquelle (2) vorgelagert ist,
- der an einer Vorderseite (7) eine Lichtaustrittsfläche aufweist und
- der an einer der Vorderseite (7) abgewandten Rückseite (5) eine Mehrzahl von reflektierenden Elementen (6, 9, 15, 21, 27, 31) aufweist,
**dadurch gekennzeichnet, dass** die reflektierenden Elemente als Auskoppelelemente (6, 9, 15, 21, 27, 31) ausgebildet sind mit einer solchen Form und/oder Kontur, dass sie in einem Abstand zu dem Lichtleiter (1, 8, 14) zumindest im Nichtbetriebszustand der Signalleuchte als ein vorgegebenes Muster und im Betriebszustand der Signalleuchte als eine homogen ausgeleuchtete Fläche erkennbar sind, und dass die Auskoppelelemente (6, 9, 15, 21, 27, 31) gruppiert in einer Mehrzahl von Blöcken (10, 12, 13, 18, 19, 20, 24, 25, 26, 28, 29, 30, 33, 34, 35) angeordnet sind, wobei sich die Größe der Auskoppelelemente (9, 15, 21, 27, 31) der jeweils in einem Block (10, 12, 13, 18, 19, 20, 24, 25, 26, 28, 29, 30, 33, 34, 35) angeordneten Auskoppelelemente (9, 15, 21, 27, 31) mit der Entfernung zu der Lichteinkoppelfläche (3, 11, 17, 23, 32) sprunghaft vergrößert.

2. Signalleuchte nach Anspruch 1, **dadurch gekennzeichnet, dass** die Auskoppelelemente (6, 9, 15, 21, 27, 31) rasterartig und/oder gitterförmig verteilt an der Rückseite (5) des Lichtleiters (1, 8, 14) angeordnet sind.

3. Signalleuchte nach Anspruch 1 oder 2, **dadurch gekennzeichnet, dass** die Rückseite des Lichtleiters (1) in einem solchen Teilbereich, in dem dem Lichtleiter (1) ein Lichtaustrittsmittel zur Erzeugung einer weiteren Lichtfunktion vorgelagert und/oder nachgelagert ist, Auskoppelelemente verringerter Größe und/oder gar keine Auskoppelelemente aufweist.

4. Signalleuchte nach einem der Ansprüche 1 bis 3, **dadurch gekennzeichnet, dass** die Anzahl und/oder die Größe und/oder die Verteilung der in einem Block (10, 12, 13, 18, 19, 20, 24, 25, 26, 28, 29, 30, 33, 34, 35) angeordneten Auskoppelelemente (9, 15, 21, 27, 31) von der Formgebung der Signalleuchte abhängt.

5. Signalleuchte nach einem der Ansprüche 1 bis 4, **dadurch gekennzeichnet, dass** die Auskoppelelemente (9, 15, 21, 27, 31) derart verteilt auf der Rückseite (5) des Lichtleiters (1, 8, 15) angeordnet sind, dass zumindest blockweise eine homogene Lichtabstrahlung erfolgt.

6. Signalleuchte nach Anspruch 5, **dadurch gekennzeichnet, dass** sich die Größe der Auskoppelelemente (9, 15, 21, 27, 31) kontinuierlich mit der Entfernung zu der Lichteinkoppelfläche (3, 11, 17, 23, 32) ändert.

7. Signalleuchte nach einem der Ansprüche 1 bis 6, **dadurch gekennzeichnet, dass** die Auskoppelelemente (6, 9, 15, 21, 27, 31) bis zu 75 % der Fläche der Rückseite (5) bedecken.

8. Signalleuchte nach einem der Ansprüche 1 bis 7, **dadurch gekennzeichnet, dass** die Auskoppelelemente jeweils als Kugelelemente (6) und/oder als Kreiselemente (9) und/oder als Linienelemente (15) und/oder als Bogenelemente (21) und/oder als Teilkreisringelemente (27) und/oder als Mehreckelemente ausgebildet sind.

9. Signalleuchte nach einem der Ansprüche 1 bis 8, **dadurch gekennzeichnet, dass** die Auskoppelelemente in Form von Symbolen und/oder Logos (31) und/oder einer Beschriftung auf der Rückseite (5) des Lichtleiters (1) angebracht sind.

10. Signalleuchte nach einem der Ansprüche 1 bis 9, **dadurch gekennzeichnet, dass** die Auskoppelelemente (6, 9, 15, 21, 27, 31) auf der Rückseite (5) des Lichtleiters (1, 8, 14) durch Drucken oder durch Laserstrukturierung oder durch Erodierung oder durch Ätzung aufgebracht sind.

11. Signalleuchte nach Anspruch 10, **dadurch gekennzeichnet, dass** die gedruckten Auskoppelelemente (6, 9, 15, 21, 27, 31) eine zum Grundkörper des Lichtleiters (1) unterschiedliche Farbgebung und/oder die Auskoppelelemente (6, 9, 15, 21, 27, 31) zueinander eine unterschiedliche Farbgebung aufweisen.

## Claims

1. Signalling light for vehicles having a plane light conductor (1,8,14) which comprises a light injection surface (3,11, 17,23,32) on one of its narrow sides and on the upstream side of which at least one light source (2) is disposed, which has a light emission surface on a front face (7) and which comprises a plurality of reflecting elements (6,9,15,21,27, 31) on its rear face (5) opposite said front face, **characterized by** the fact that the reflecting elements are provided as extraction elements (6,9,15,21,27,31) having such a shape and/ or contour that in the inoperative state of the signalling light they are visible as a given pattern and in their operative state as a homogeneously illuminated surface, and that the extraction elements (6,9,15,21,27,31) are grouped together in a plurality of blocks (10,12,13,18,19,20,24,25, 26,28,29,30,33,34,35) wherein the size of said extraction elements (6,9,15,21,27,31) in each of the blocks (10,12,13, 18,19,20,24,25,26,28,29,30,33,34,35) increases stepwise with their distance from the light injection surface (3,11,17, 23, 32).

2. Signalling light according to Claim 1, **characterized by** the fact that the extraction elements (6,9,15,21,27,31) are disposed on the rear face (5) of the light conductor (1,8,14) in a grid and/or lattice distribution pattern.

3. Signalling light according to Claim 1 or 2, **characterized by** the fact that a partial area of the rear face of the light conductor (1) where a light emission means to generate a further light function is allocated to the light conductor (1) on the upstream and/or downstream side thereof comprises extraction elements of reduced size and/or no such extraction elements at all.

4. Signalling light according to any of the preceding Claims 1 to 3, **characterized by** the fact that the number and/or size and/or distribution of the extraction elements (9,15,21, 27,31) arranged in anyone of the blocks (10,12,13,18,19,20, 24,25,26,28, 29,30,33,34,35) are dependent on the shape of the signalling light.

5. Signalling light according to any of the preceding Claims 1 to 4, **characterized by** the fact that the extraction elements (9,15,21,27,31) are arranged on the rear face (5) of the light conductor (1,8,15) in such distribution that a homogeneous radiation of light will be ensured at least blockwise.

6. Signalling light according to Claim 5, **characterized by** the fact that the size of the extraction elements (9,15,21, 27,31) continually varies with their distance from the light injection surface (3,11,17,23,32).

7. Signalling light according to any of the preceding Claims 1 to 6, **characterized by** the fact that the extraction elements (6,9,15,21,27,31) cover up to 75 % of the area of the rear face (5)

8. Signalling light according to any of the preceding Claims 1 to 7, **characterized by** the fact that the extraction elements are spherical elements (6) and/or circular elements (9) and/or linear elements (15) and/or curved elements (21) and/or part-circular ring elements (27) and/or polygonal elements.

9. Signalling light according to any of the preceding Claims 1 to 8, **characterized by** the fact that the extraction elements are applied to the rear face (5) of the light conductor (1) in the form of symbols and/or logos and/or inscriptions.

10. Signalling light according to any of the preceding Claims 1 to 9, **characterized by** the fact that the extraction elements (6,9,15,21,27,31) on the rear face (5) of the light conductor (1,8,14) are applied by printing or laser structuring or eroding or etching.

11. Signalling light according to Claim 10, **characterized by** the fact that the color of the extraction elements (6,9,15,21,27,31) is different from that of the basic body of the light conductor (1) or that the colors of said extraction elements as such are different from one another.

## Revendications

1. Lampe de signalisation pour véhicules automobiles, avec un conducteur optique plat (1, 8, 14).
- qui présente sur un côté étroit une surface de couplage de lumière (3, 11, 17, 23, 32), au moins une source de lumière (2) étant installée en amont de ladite surface de couplage de lumière (3, 11, 17, 23, 32),
- qui présente sur une face avant (7) une surface de sortie de lumière, et
- qui présente sur une face arrière (5), opposée à la face avant (7), plusieurs éléments réflecteurs (6, 9, 15, 21, 27, 31),
**caractérisée en ce que** les éléments réflecteurs sont conçus en tant qu'éléments de découplage (6, 9, 15, 21, 27, 31) présentant une forme et / ou un contour tels qu'ils apparaissent, à une distance du conducteur optique plat (1, 8, 14), au moins à l'état hors de service de la lampe de signalisation, comme un motif prédéterminé et, quand la lampe de signalisation est en service, comme une surface éclairée de manière homogène, et **en ce que** les éléments de découplage (6, 9, 15, 21, 27, 31) sont groupés en plusieurs blocs (10, 12, 13, 18, 19, 20, 24, 25, 26, 28, 29, 30, 33, 34, 35), la grandeur des éléments de découplage (9, 15, 21, 27, 31) des éléments de découplage (9, 15, 21, 27, 31) disposés dans un bloc respectif (10, 12, 13, 18, 19, 20, 24, 25, 26, 28, 29, 30, 33, 34, 35) augmente abruptement en fonction de l'éloignement par rapport à la surface de couplage de lumière (3, 11, 17, 23, 32).

2. Lampe de signalisation selon la revendication 1, **caractérisée en ce que** les éléments de découplage (6, 9, 15, 21, 27, 31) sont disposés, répartis, en forme de trames ou de grilles, sur la face arrière (5) du conducteur optique (1, 8, 14).

3. Lampe de signalisation selon revendication 1 ou 2, **caractérisée en ce que** la face arrière du conducteur optique (1) présente, dans une zone partielle, dans laquelle un moyen de sortie de la lumière est installé en amont et / ou en aval du conducteur optique (1) pour générer une autre fonction d'éclairage, des élément de découplage de plus petite taille et / ou même aucuns éléments de découplage.

4. Lampe de signalisation selon l'une des revendications 1 à 3, **caractérisée en ce que** le nombre et / ou la grandeur et / ou la répartition des éléments de découplage (9, 15, 21, 27, 31) disposés en un bloc (10, 12, 13, 18, 19, 20, 24, 25, 26, 28, 29, 30, 33, 34, 35) dépendent de la conception de la lampe de signalisation.

5. Lampe de signalisation selon l'une des revendications 1 à 4, **caractérisée en ce que** les éléments de découplage (9, 15, 21, 27, 31) sont répartis sur la face arrière (5) du conducteur optique (1, 8, 14) d'une manière telle qu'un rayonnement homogène de la lumière est obtenu au moins par blocs.

6. Lampe de signalisation selon la revendication 5, **caractérisée en ce que** la grandeur des éléments de découplage (9, 15, 21, 27, 31) change continuellement en fonction de l'éloignement par rapport à la surface de couplage de lumière (3, 11, 17, 23, 32),.

7. Lampe de signalisation selon l'une des revendications 1 à 6, **caractérisée en ce que** les éléments de découplage (6, 9, 15, 21, 27, 31) couvrent jusqu'à 75 % de la surface de la face arrière (5).

8. Lampe de signalisation selon l'une des revendications 1 à 7, **caractérisée en ce que** les éléments de découplage sont respectivement réalisés en tant qu'éléments sphériques (6) et / ou en tant qu'éléments circulaires (9) et / ou en tant qu'éléments linéaires (15) et / ou en tant qu'éléments arqués (21) et / ou en tant qu'éléments en forme d'anneaux (27) et / ou en tant qu'éléments polygonaux.

9. Lampe de signalisation selon l'une des revendications 1 à 8, **caractérisée en ce que** les éléments de découplage sont appliqués en forme de symboles et / ou de logos (31) et ou d'une inscription sur la face arrière (5) du conducteur optique (1).

10. Lampe de signalisation selon l'une des revendications 1 à 9, **caractérisée en ce que** les éléments de découplage (6, 9, 15, 21, 27, 31) sont appliqués sur la face arrière (5) du conducteur optique (1, 8, 14) en étant imprimés, ou structurés au laser, ou gravés.

11. Lampe de signalisation selon la revendication 10, **caractérisée en ce que** les éléments de découplage (6, 9, 15, 21, 27, 31) imprimés présentent une couleur qui diffère de celle du corps de base du conducteur optique (1) et / ou que les éléments de découplage (6, 9, 15, 21, 27, 31) présentent des couleurs différentes les uns par rapport aux autres.
